Europäisches Patentamt

European Patent Office

Office européen des brevets

(11) Veröffentlichungsnummer: **0 364 683**

**A2**

(12) **EUROPÄISCHE PATENTANMELDUNG**

(21) Anmeldenummer: **89114644.1**

(22) Anmeldetag: **08.08.89**

(51) Int. Cl.⁵: **B62D 47/02**

(30) Priorität: **20.10.88 DE 3835685**

(43) Veröffentlichungstag der Anmeldung:
**25.04.90 Patentblatt 90/17**

(84) Benannte Vertragsstaaten:
**DE FR IT NL**

(71) Anmelder: **MAN Nutzfahrzeuge
Aktiengesellschaft
Dachauer Strasse 667 Postfach 50 06 20
D-8000 München 50(DE)**

(72) Erfinder: **Rieck, Gerhard, Dipl.-Ing.
Fasanenstrasse 30
D-8000 München 60(DE)**
Erfinder: **Jarausch, Franz
Bergstrasse 9
D-8061 Röhrmoos(DE)**

(54) **Seitenwandsichtfenster für Behinderte.**

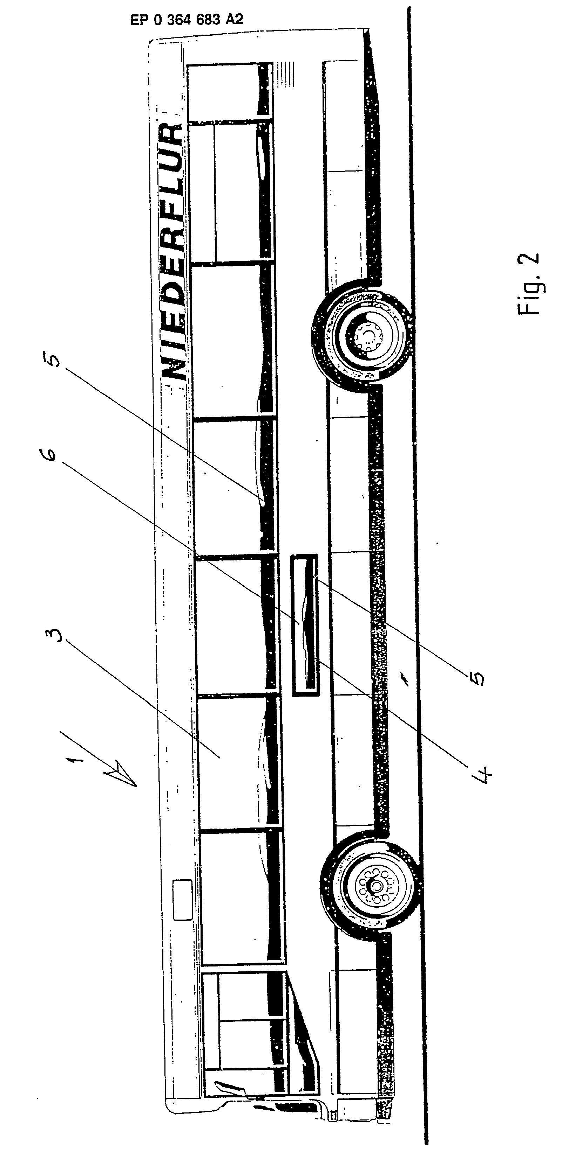

(57) Die Erfindung bezieht sich auf einen Niederfluromnibus mit über seiner Breitseite angeordneten
Seitenwand-Sichtfenstern 3. In der Mitte des Fahrgastraumes ist die podestlose Unterbringung eines
Schwerbehinderten vorgesehen. Da dessen Blickebene tiefer liegt, ist ein spezielles Seitenwandfenster 2 in seinem Blickbereich vorgesehen, das über
die untere Ebene der anderen Sichtfenster heruntergezogen ist und mit seiner unteren Begrenzung 4 es
dem Schwerbehinderten ermöglicht, voll am Verkehrsgeschehen 5 teilzunehmen. Das Fenster 2 ist
einteilig ausgebildet. In der zweiten Ausführungsform
nach Fig. 2 ist ein zweiteiliges Sichtfenster im Bereich des Schwerbehinderten vorgesehen, das aus
einem normalen Sichtfenster 3 besteht und einem
darunter angeordneten, durch einen Teil der Blechkarosserie getrennten Seitenwandsichtfenster 6.

Fig. 1

Die Erfindung bezieht sich auf einen Omnibus, insbesondere einen Niederfluromnibus, mit in der Karosserie eingearbeitetem Seitenwand-Sichtfenster.

Der Erfindung liegt die Aufgabe zugrunde, einen Rollstuhlfahrer als Fahrgast voll zu integrieren.

Dies wird erfindungsgemäß dadurch erreicht, daß, vorzugsweise im mittleren Bereich des Fahrgastraumes des Omnibusses, ein Sitzplatz für Schwerbehinderte mit gegenüber der durchgängigen Sitzebene abgesenkter Sitzebene eingerichtet ist und das zugehörige Seitenwand-Sichtfenster gegenüber den anderen Seitenwand-Sichtfenstern derart heruntergezogen ist, daß seine untere Begrenzung es dem Rollstuhlfahrer ermöglicht, unbeeinträchtigt am Verkehrsgeschehen teilzunehmen. Solcherart ist die Beförderung des Rollstuhlfahrers mit keinerlei Beeinträchtigung seines Wohlbefindens verbunden. Es ermöglicht ihm, so am Verkehrsgeschehen teilzunehmen wie die anderen Fahrgäste auf den daneben angebrachten, auf einem Podest stehenden Sitzen. Indem der Rollstuhlfahrer am Verkehrsgeschehen voll teilnehmen kann, ist dadurch auch seine Sicherheit erhöht, da er das Verkehrsgeschehen besser mitbekommt und sich notfalls rechtzeitig auf eine Gefahrensituation einstellen kann. Die Unteransprüche stellen bevorzugte Ausbildungsformen der Erfindung dar. Die Erfindung ist in zwei Ausführungen dargestellt. Es zeigen:

Fig. 1 einen Omnibus mit einteilig ausgebildetem Seitenwand-Sichtfenster,

Fig. 2 einen Omnibus mit zweiteilig ausgebildetem Seitenwand-Sichtfenster.

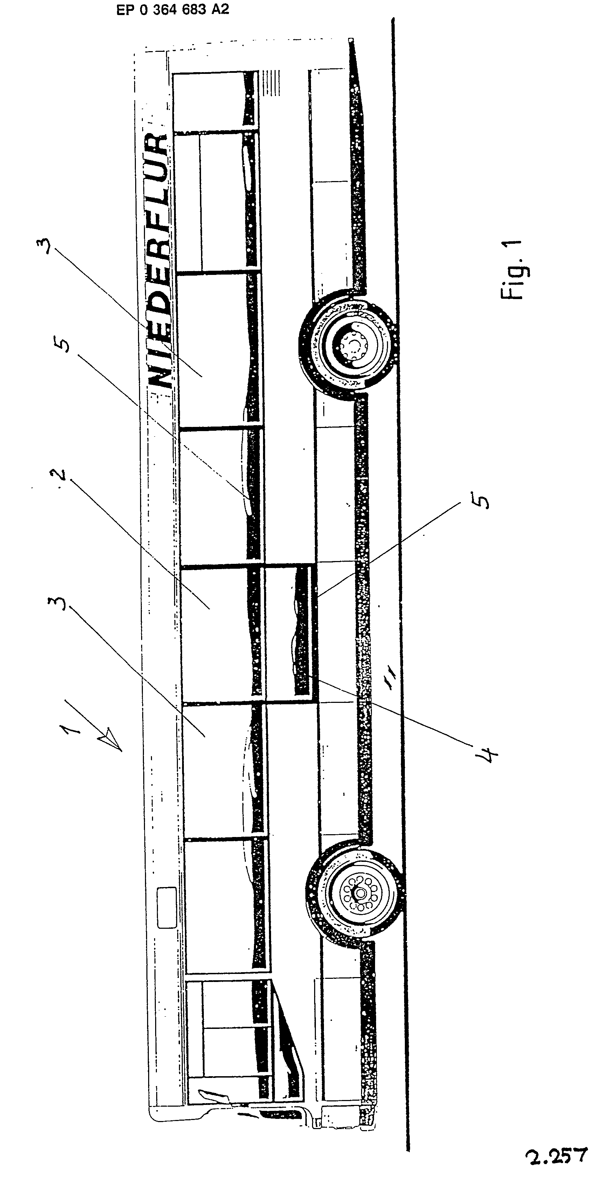

Fig. 1 zeigt einen Niederfluromnibus mit über seiner Breitseite angeordneten Seitenwand-Sichtfenstern 3. In der Mitte des Fahrgastraumes ist die podestlose Unterbringung eines Schwerbehinderten vorgesehen. Da dessen Blickebene tiefer liegt, ist ein spezielles Seitenwandfenster 2 in seinem Blickbereich vorgesehen, das über die untere Ebene der anderen Sichtfenster heruntergezogen ist und mit seiner unteren Begrenzung 4 es dem Schwerbehinderten ermöglicht, .voll am Verkehrsgeschehen 5 teilzunehmen. Das Fenster 2 ist einteilig ausgebildet. In der zweiten Ausführungsform nach Fig. 2 ist ein zweiteiliges Sichtfenster im Bereich des Schwerbehinderten vorgesehen, das aus einem normalen Sichtfenster 3 besteht und einem darunter angeordneten, durch einen Teil der Blechkarosserie getrennten Seitenwandsichtfenster 6.

**Ansprüche**

1. Omnibus, insbesondere Niederfluromnibus mit Seitenwandsichtfenster, dadurch gekennzeichnet, daß, vorzugsweise im mittleren Bereich des Fahrgastraumes des Omnibusses (1), ein Sitzplatz für Schwerbehinderte mit gegenüber der durchgängigen Sitzebene abgesenkter Sitzebene eingerichtet ist und das zugehörige Seitenwand-Sichtfenster (2) gegenüber den anderen Seitenwand-Sichtfenstern (3) derart heruntergezogen ist, daß seine untere Begrenzung (4) es dem Rollstuhlfahrer oder sich dort aufhaltenden anderen Fahrgästen ermöglicht, optisch am Verkehrsgeschehen (5) besser teilzunehmen.

2. Omnibus, insbesondere Niederfluromnibus, nach Anspruch 1, dadurch gekennzeichnet, daß das Seitenwand-Sichtfenster (2) einteilig ausgebildet ist.

3. Omnibus, insbesondere Niederfluromnibus, nach Anspruch 1, dadurch gekennzeichnet, daß das Seitenwand-Sichtfenster (2) zweiteilig ausgebildet ist, wobei zu einem normalen Seitenwand-Sichtfenster (3) ein darunter angeordnetes Blickfenster (6) vorgesehen ist, das in die untere Seitenwand der Karosserie eingearbeitet ist.

Fig. 1

EP 0 364 683 A2

Fig. 2

EP 0 364 683 A2